# EUROPEAN PATENT SPECIFICATION

(11) **EP 4 030 367 B1**
(45) Date of publication and mention of the grant of the patent: **17.09.2025**
(21) Application number: 20902109.6
(22) Date of filing: 28.08.2020
(51) Int. Cl.: G06Q 10/08, H04L 9/40, G06F 21/64

(54) **SIGN-BILL COLLECTION METHOD AND APPARATUS BASED ON BLOCKCHAIN, AND DEVICE AND READABLE STORAGE MEDIUM**
FRACHTBRIEFEINSAMMELVERFAHREN UND VORRICHTUNG BASIEREND AUF EINER BLOCKCHAIN SOWIE VORRICHTUNG UND LESBARES SPEICHERMEDIUM
PROCÉDÉ ET APPAREIL DE COLLECTE D'EFFETS SIGNÉS SUR LA BASE D'UNE CHAÎNE DE BLOCS, ET DISPOSITIF ET SUPPORT DE STOCKAGE LISIBLE

(30) Priority: 20.12.2019 CN 201911322241
(43) Date of publication of application: 20.07.2022
(73) Proprietor: Beijing Jingbangda Trade Co., Ltd., Beijing 100080 (CN); Beijing Jingdong Zhenshi Information Technology Co., Ltd., Beijing, Beijing 100086 (CN)
(72) Inventor: CONG, Qing, Beijing 100086 (CN); WANG, Zhenhui, Beijing 100086 (CN); ZHE, Wenming, Beijing 100086 (CN); QIAO, Xiaoqiang, Beijing 100086 (CN)
(74) Representative: Barker Brettell LLP
(86) International application number: PCT/CN2020/112018
(87) International publication number: WO 2021/120686

(56) References cited:
- WO-A2-2019/217367
- CN-A- 106 022 681
- CN-A- 106 022 681
- CN-A- 110 298 610
- CN-A- 110 503 373
- CN-A- 110 751 448
- US-A1- 2019 180 291
- HASAN HAYA R ET AL: "Blockchain-Based Proof of Delivery of Physical Assets With Single and Multiple Transporters", IEEE ACCESS, vol. 6, 21 August 2018 (2018-08-21), pages 46781 - 46793, XP011689938, DOI: 10.1109/ACCESS.2018.2866512

## Description

### TECHNICAL FIELD

The present invention relates to the field of warehousing and logistics technologies and, in particular to a method and apparatus for sign-bill return based on a blockchain, a device, and a readable storage medium.

### BACKGROUND

With the development of e-commerce, logistics management has gradually become an important aspect of commodity intermediate links. In some existing logistics business operations, logistics companies need to return document information signed by a recipient to a sender after successful delivery. How to improve efficiency and reliability of sign-bill return is one of the problems to be solved in logistics business.

In the existing logistics business operation, a logistics distributor needs to print out a waybill, and mail a paper sign-bill back to a sender after a customer signs it, or take a photo of the paper sign-bill to form an electronic photo and send it to the sender online.

However, the paper sign-bill is easy to be lost and damaged, and there are some problems of low efficiency and low reliability in existing sign-bill return methods.

The document CN106022681A discloses a logistics tracking method based on blockchain technologies, which utilizes non-tamperable features of the blockchain to ensure the traceability of logistics information.

The document XP011689938 discloses a simple scheme based on Ethereum blockchain which involves transporting a product between two parties. The scheme depends on a signal key that is given to the transporter by the seller. The key is transported along with the item and is handed over to the receiver who is the buyer. The buyer then needs to enter the key for verification. The key hash would already be available in the smart contract which acts as an escrow and holds the byer's Ether. The Ether would only be placed in the seller's account if the hash of the key entered by the buyer matches the existing hash in the smart contract.

The document US2019180291A discloses a method of manufacturing, packaging and providing verification of authenticity of medicine, including: manufacturing a medicine; signing a certificate identifying the medicine using a private key of a manufacturer; writing the signed certificate to a blockchain; and printing a package using a 3D printer to enclose the medicine and to include the signed certificate in a machine-readable form.

### SUMMARY

Embodiments of the present invention provide a method and apparatus for sign-bill return based on a blockchain, a device and a readable storage medium, which increases efficiency and reliability of sign-bill return. The present invention is defined in appended set of claims.

The present invention provides a method and apparatus for sign-bill return based on a blockchain, a device and a readable storage medium, through acquiring a sign-bill return request sent by a shipment terminal; acquiring pre-stored target sign-bill information according to the sign-bill return request; acquiring a target hash value corresponding to the target sign-bill information from the blockchain; and sending the target sign-bill information to the shipment terminal when verifying that the target sign-bill information is correct by the target hash value, the tamper-proof blockchain storage of the target sign-bill information is achieved, which not only improves efficiency of the sign-bill return, but also improves reliability of the sign-bill return.

### BRIEF DESCRIPTION OF DRAWINGS

FIG. 1 is a schematic diagram of an application scenario of sign-bill return based on a blockchain provided by an embodiment of the present invention;
FIG. 2 is a flow chart of a method for sign-bill return based on a blockchain provided by an embodiment of the present invention;
FIG. 3 is a flow chart of another method for sign-bill return based on a blockchain provided by an embodiment of the present invention;
FIG. 4 is a schematic structural diagram of an apparatus for sign-bill return based on a blockchain provided by an embodiment of the present invention;
FIG. 5 is a schematic structural diagram of another apparatus for sign-bill return based on a blockchain provided by an embodiment of the present invention; and
FIG. 6 is a schematic structural diagram of hardware of an electronic device provided by an embodiment of the present invention.

### DESCRIPTION OF EMBODIMENTS

In order to make purposes, technical solutions and advantages of embodiments of the present invention clearer, the technical solutions in the embodiments of the present invention will be clearly and completely described below with reference to the accompanying drawings in the embodiments of the present invention. Obviously, the described embodiments are only a part of the embodiments of the present invention, but not all the embodiments.

The terms "first", "second", "third", "fourth", etc. (if present) in the description, claims and the above-mentioned drawings of the present invention are used to distinguish similar objects and are not necessarily used to describe a specific order or sequence. It should be understood that data so used may be interchanged under appropriate circumstances, so that the embodiments of the present invention described herein can be implemented in sequences other than those illustrated or described herein.

It should be understood that, in various embodiments of the present invention, the size of a sequence number of each process does not mean the sequence of execution, and the execution sequence of each process should be determined by its functions and internal logic, and should not constitute any limitation on the process of the embodiments of the present invention.

It should be understood that in the present invention, "comprising" and "including" and any variations thereof are intended to cover non-restrictive inclusions, for example, a process, a method, a system, a product or a device including a series of steps or units is not necessarily limited to those steps or elements that are clearly listed, instead, they can include other steps or elements that are not clearly listed or are inherent to the process, the method, the product or the device.

It should be understood that, in the present invention, "multiple" refers to two or more. "And/or" is just an association relationship describing associated objects, indicating that there are three relationships. For example, A and/or B, which can mean: A exists alone, A and B exist at the same time, and B exists alone. A character "/" generally indicates that the associated objects before and after are in an "or" relationship. "Containing A, B and C" and "containing A, B, C" means that A, B, and C are all contained, "containing A, B or C" means that one of A, B, and C is contained, and "contain A, B and/or C" means that containing any one or any two or all of A, B, and C.

It should be understood that in the present invention, "B corresponding to A", "B in correspondence with A", "A corresponds to B" or "B corresponds to A" means that B is associated with A, and B can be determined according to A. Determining B according to A does not mean determining B only according to A, but also determining B according to A and/or other information. The matching between A and B means that the similarity between A and B is greater than or equal to a preset threshold.

Depending on the context, "if" as used herein may be interpreted as "in the case of" or "when" or "in response to determining" or "in response to detecting".

It should be understood that, in the present invention, the sign-bill refers to a waybill signed by a receiving terminal. Therefore, the waybill includes a waybill before signed at the receiving terminal and a waybill after signed at the receiving terminal. Waybill information includes, but is not limited to, shipment terminal information, a waybill identification, receiving terminal information, etc. Sign-bill information includes the waybill information and the receipt signature information written at the receiving terminal.

The technical solutions of the present invention will be described in detail below with specific embodiments. The following specific embodiments may be combined with each other, and the same or similar concepts or processes may not be repeated in some embodiments.

In the existing the sign-bill return operation, a logistics company needs to print out a waybill, and mail a paper sign-bill back to a sender after a customer signs it, or take a photo of the paper sign-bill to form an electronic photo and send it to the sender online. Usually, the status after printing a paper document is as follows: to be signed, returned to a warehouse, sign-bill to be returned, sent to a merchant, completed, cancelled, etc. In the system, the paper document also needs to be associated with an express number and a name of a express company. Combined with the paper document, the status of an online electronic document is as follows: canceled, to be photographed, photographed to be confirmed, completed, photographed, etc. It is necessary to upload a picture of the electronic document to a specified server system, and then a picture address and a waybill number are manually synchronized to an order system, etc. Since the waybill needs to be transferred in multiple different systems, such as an order system, a delivery system, and other intermediate transmission systems, data interaction between the systems is completed through interfaces or messages.

The existing method of sign-bill return is for the return of paper documents which are easy to lose, have high operating costs and are easily counterfeited. And through taking pictures of the paper documents and uploading them to the specified server, and after associating the picture address information with the waybill, it is recorded in the information system. Because the pictures of handwritten signatures cannot be recognized by optical character recognition (OCR), and the pictures are not clearly taken and other problems, it is still necessary to manually review each document, causing complicated operation and the low error rate. Moreover, in the existing sign-bill return, a data flow of the waybill or the sign-bill will be transferred in multiple systems, and a problem of data synchronization between the systems is related, in particular, related to problems of trust when the data is shared between different companies. There can be seen that there are problems of low efficiency and low reliability in existing methods for sign-bill return.

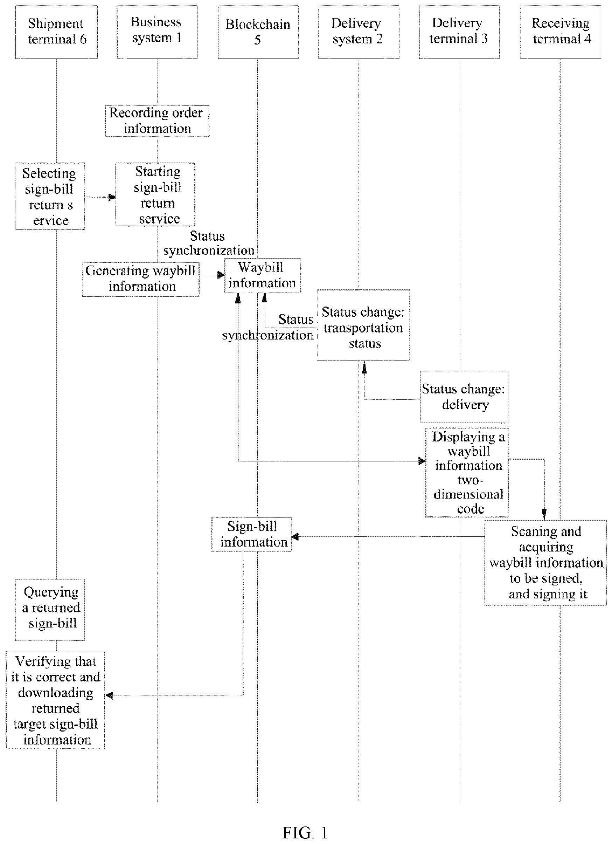

Referring to FIG. 1, which is a schematic diagram of an application scenario of sign-bill return based on a blockchain provided by an embodiment of the present invention. As shown in FIG. 1, a business system 1 records order information, and starts a sign-bill return service when receiving a sign-bill return service instruction initiated by a shipment terminal 6. The business system 1 stores generated waybill information to a blockchain 5 through status synchronization, and a delivery system 2 stores a changed transport status to the blockchain synchronously once a transport status changes during a delivery process. A delivery terminal 3 is, for example, a handheld terminal of a dispatcher. When the dispatcher is delivering, acquires an electronic version of a document to be signed through the delivery terminal 3, generates a waybill information two-dimensional code, and displays it to a recipient user. The recipient user scans the two-dimensional code on a receiving terminal 4 to sign for receipt, and uploads signed sign-bill information to the blockchain for storage. A delivery user queries a returned sign-bill through the shipment terminal 6, and verifies it according to the sign-bill information stored in the blockchain, and downloads and obtains returned target sign-bill information after the verification is correct. In the scenario shown in FIG. 1, the business system 1, the delivery system 2, the delivery terminal 3 and the receiving terminal 4 all synchronize the status to the blockchain 5 when the status of the waybill changes in their own links, and use tamper-proof characteristics of the blockchain to realize reliable storage and update of the waybill information. Finally, the shipment terminal 6 actively initiates a return process of the sign-bill. When inquiring about the sign-bill returned, the shipment terminal 6 downloads the corresponding data from the blockchain 5 to verify the sign-bill returned, and then receives the sign-bill returned when the verification is correct. Therefore, based on the tamper-proof storage characteristics of the blockchain, it realizes reliable sign-bill verification and efficient sign-bill return.

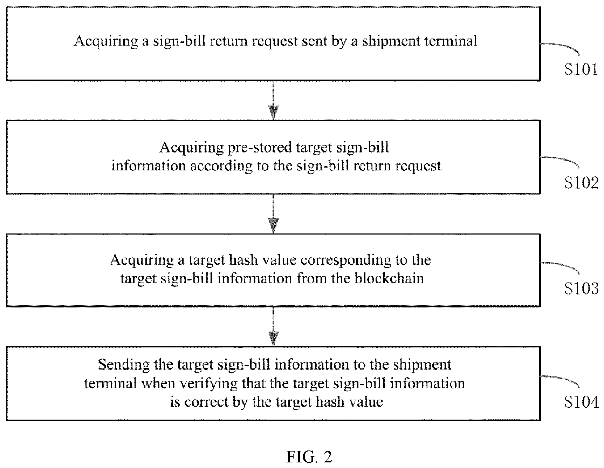

Referring to FIG. 2, which is a flow chart of a method for sign-bill return based on a blockchain provided by an embodiment of the present invention. An executive entity of the method shown in FIG. 2 may be a software and/or hardware apparatus, such as a system server or a software module built-in the system server. The system server can also be a server that provides various services, such as a background management server (just an example) that provides support for the logistics waybill webpage browsed by the user using a terminal device. The background management server can perform a process such as search and analyze on received data such as a logistics information query request and a sign-bill return request, and feed back a processing result (such as target sign-bill information) to the terminal device. The method shown in FIG. 2 includes steps S101 to S104.

S101, acquiring a sign-bill return request sent by a shipment terminal.

The shipment terminal may, for example, send a sign-bill return request at the same time as or after the order is generated, so that the system server can perform the sign-bill return on the shipment terminal according to the sign-bill return request when acquiring target sign-bill information.

S102, acquiring pre-stored target sign-bill information according to the sign-bill return request.

It can be understood that the sign-bill return request contains a sign-bill identifier that the shipping user wants to return, for example, a waybill identifier. The waybill identifier is, for example, a waybill number. When receiving the sign-bill return request, the system server obtains the waybill identifier from parsing the sign-bill return request and checks whether the waybill corresponding to the waybill identifier has been signed according to the waybill identifier. If signed sign-bill information is found, the sign-bill information is used as target sign-bill information. If the target sign-bill information is not found, a message that a waybill has not been signed can be returned to the receiving terminal or the waybill information at the current stage can be returned to the shipping terminal until the target sign-bill information is found.

S103, acquiring a target hash value corresponding to the target sign-bill information from the blockchain.

The hash value corresponding to all the waybill information is stored in the blockchain. When the target sign-bill information is found, the hash value should also be stored in the blockchain in advance. For example, each piece of sign-bill information corresponds to a blockchain storage identifier, and the blockchain storage identifier is used to indicate the storage location of the hash value corresponding to the sign-bill information in the blockchain. A blockchain storage identifier corresponding to the target sign-bill information is acquired, and a searching is performed in the blockchain by using the blockchain storage identifier to obtain the target hash value. The target hash value indicates the correct pre-stored target sign-bill information, and can be used as a verification basis to be compared with the target sign-bill information obtained in step S102.

S104, sending the target sign-bill information to the shipment terminal when verifying that the target sign-bill information is correct by the target hash value.

For example, hash processing is performed on the target sign-bill information to obtain a hash value to be verified. Then it is determined that whether the hash value to be verified is consistent with the target hash value.

If the hash value to be verified is consistent with the target hash value, then it is determined that the target sign-bill information is correct. The target sign-bill information determined to be correct is sent to the shipment terminal, and a result verified to be correct or a certificate can also be sent to the shipment terminal at the same time.

If the hash value to be verified is inconsistent with the target hash value, then it is determined that the target sign-bill information is incorrect. Verification error prompt information can be returned to the shipment terminal and the business system to prompt the business system to handle the error.

This embodiment provides a method for sign-bill return based on a blockchain, through acquiring a sign-bill return request sent by a shipment terminal; acquiring pre-stored target sign-bill information according to the sign-bill return request; acquiring a target hash value corresponding to the target sign-bill information from the blockchain; and sending the target sign-bill information to the shipment terminal, when verifying that the target sign-bill information is correct by the target hash value, the tamper-proof blockchain storage of the target sign-bill information is achieved, which not only improves the efficiency of the sign-bill return, but also improves the reliability of the sign-bill return.

Based on the above embodiment, before step S102 or before step S101, the process of creating, synchronizing and updating the waybill information can also be performed, and the implementation thereof can be various. Examples and descriptions are given below with reference to the accompanying drawings and specific embodiments.

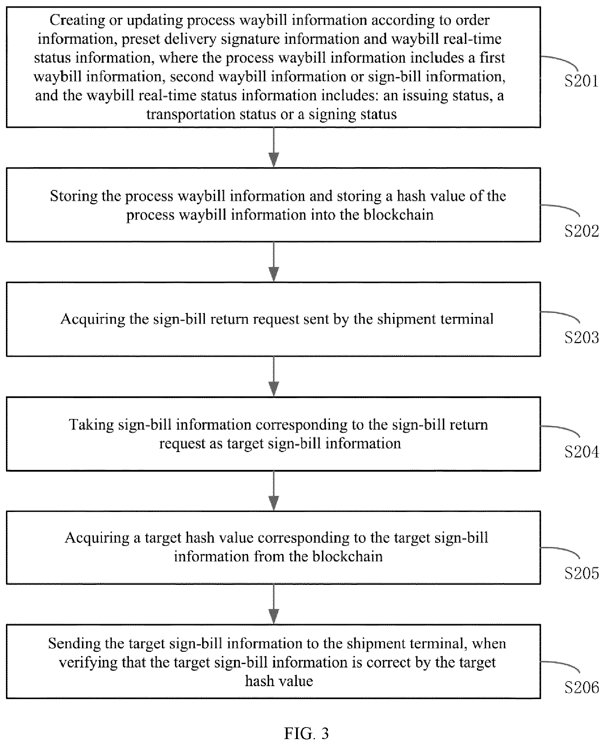

Referring to FIG. 3, which is a flow chart of another method for sign-bill return based on a blockchain provided by an embodiment of the present invention. The method shown in FIG. 3 includes steps S201 to S206.

S201, creating or updating process waybill information according to order information, preset delivery signature information and waybill real-time status information, where the process waybill information includes first waybill information, second waybill information or sign-bill information, and the waybill real-time status information includes: an issuing status, a transportation status or a signing status.

With the change of the goods status information, the process waybill information can have multiple statuses. For example, the process waybill information can include first waybill information and second waybill information without receipt signature information written, and the sign-bill information with the receipt signature information written. The system server realizes the creation and update of the process waybill information according to the order information, the preset delivery signature information and the waybill real-time status information. Where essential steps of the updating may be completed on other terminals, and the system server will perform reception, verification and storage. The delivery signature information includes, for example, a preset delivery digital certificate and a preset delivery digital signature.

In some embodiments, the process waybill information includes sign-bill information. In step S201, there can be many ways to update the process waybill information. In one implementation, for example, when the dispatcher delivers the goods, the two-dimensional code of the waybill needs to be provided to the receiving user, and then a sign-bill request is sent to the system server by the logistics terminal. When receiving the sign-bill request sent by the logistics terminal, the system server sends the second waybill information to the logistics terminal, so that, when verifying that the delivery signature information is correct, the logistics terminal provides the receiving terminal with an encoded image indicating the second waybill information according to the second waybill information, where the second waybill information includes the waybill real-time status information indicating the shipping status, the order information, and the delivery signature information. The encoded image here is, for example, a two-dimensional code image. The delivery signature information includes, for example, a preset delivery digital certificate and a preset delivery digital signature. The process of verifying the correctness delivery signature information at the logistics terminal is that, for example, the shipper endorses its digital identity (a public key and a private key) through an authoritative certification center in advance, proves that a corresponding holder of the public key is the signer himself, and ensures authenticity and compliance of the signed account through a phone number real name, a bank card, face comparison, a hand-held ID card, etc., to realize the endorsement of the delivery digital certificate. And then when receiving the second waybill information, the logistics terminal verifies the validity of the delivery digital certificate from the certification center according to the delivery digital certificate in the second waybill information, and then verifies the validity of the delivery digital signature with the valid delivery digital certificate. If it is confirmed to be legal, it means that it is confirmed that the delivery digital certificate and the delivery digital signature are correct. The process of signature verification is not limited in this embodiment of the present invention.

In the above embodiment, when scanning the encoded image to obtain the second waybill information, the receiving terminal may first verify the correctness of the delivery signature information. In the embodiment where the delivery signature information includes the preset delivery digital certificate and the preset delivery digital signature, the validity of the delivery digital certificate can also be verified from the certification center, and then the confirmed valid delivery digital certificate can be used to verify the legitimacy of the delivery digital signature. If it is confirmed to be legal, it means that it is confirmed that the delivery digital certificate and the delivery digital signature are correct. After it is determined that the verification is correct, the sign-bill information is acquired according to the pre-stored receipt signature information. The sign-bill information includes the receipt signature information, the second waybill information, and the waybill real-time status information indicating the receipt state. The receiving terminal sends the sign-bill information to the system server. Specifically, the receiving terminal may send the sign-bill information to the logistics terminal, and then the logistics terminal forwards the sign-bill information to the system server, or the receiving terminal may directly send the sign-bill information to the system server. The system server receives the sign-bill information from the receiving terminal and verifies that the sign-bill information is correct, thereby completing the process of updating the waybill information (updating from the second waybill information to the sign-bill information) in the process of changing from the transportation status to the signing state.

Where the way of verifying that the sign-bill information is correct may be verifying that the receipt signature information included in the sign-bill information is correct, and determining that the identity information indicated by the receipt signature information is matched with recipient information indicated in the order information. Where the receipt signature information includes a receipt digital certificate and a receipt digital signature, and the receipt digital signature is bound to receiving terminal user information. For example, the receiving user endorses its digital identity (a public key and a private key) through the authoritative certificate authority (CA) center in advance, proves the corresponding holder of the public key is the signer himself, and ensures the authenticity and the compliance of the signed account through a phone number real name, a bank card, face comparison, a hand-held ID card, etc., to realize the endorsement of the receipt signature information. The recipient information indicated in the order information is, for example, a recipient's name, an ID number, a face image and/or a mobile phone number, while the identity information indicated in the receipt signature information is the information pre-endorsed by the recipient user for the receipt signature in advance in, such as, the CA center. The matching between the identity information and the recipient information here can be understood as alignment of comparison. For example, as long as the receipt signature information sent from Zhang San's mobile phone is verified to be valid and verified to be correct through the signature information endorsed by Zhang San, the system server can consider that the recipient is Zhang San himself. The system server realizes fast signature verification through the digital signature.

In another embodiment, the process waybill information includes the first waybill information and the second waybill information. The shipping signature information includes, for example, a preset delivery digital certificate and a preset delivery digital signature. In step S201, there may be multiple ways to create and update the process waybill information. In one implementation, when receiving the sign-bill request sent by the logistics terminal, before sending the second waybill information to the logistics terminal, there may also be a process of creating the first waybill information, and/or a process of acquiring the second waybill information. The process of creating the first waybill information is, for example, that the system server creates the first waybill information according to the order information, the waybill real-time status information indicating the order status, the preset delivery digital certificate, and the preset delivery digital signature. Where the first waybill information includes the order information, the waybill real-time status information indicating the order status, the preset delivery digital certificate, and the preset delivery digital signature. The process of acquiring the second waybill information is, for example, before sending the second waybill information to the logistics terminal when receiving the sign-bill request sent by the logistics terminal, the system server also sends the first waybill information to the logistics terminal, so that the logistics terminal receives the first waybill information when verifying that the delivery digital certificate and the delivery digital signature are correct. The system server can also store the created first waybill information in the local or cloud storage unit, where the first waybill information here can be understood as the content information of the waybill corresponding to the order status, for example, it can include a business order identifier (such as an order number in the business system), a waybill identifier (such as a waybill number), a shipper identifier (such as a seller name), an order date, a carrier identifier (such as a express company name) and other information. After receiving the first waybill information, the logistics terminal performs process, performs operations such as warehousing, outgoing, and transporting on the goods corresponding to the first waybill information, and sends the second waybill information to the system server when the transportation status changes. The system server receives the second waybill information from the logistics terminal, where the second waybill information is the waybill information after the logistics terminal updates the waybill real-time state information in the first waybill information according to the transportation status. The transportation status here can be, for example, information such as warehousing, outgoing, and transportation location, which can be set by the logistics terminal according to the actual situation.

S202, storing the process waybill information and storing a hash value of the process waybill information into the blockchain.

When generating or receiving the process waybill information in the above various embodiments, the system server simultaneously performs local or cloud storage and the hash value storage of the blockchain.

Specifically, for example, when the sign-bill information is received and verified to be correct, the sign-bill information is stored, and the hash value of the sign-bill information is stored in the blockchain.

For another example, when obtained first waybill information is created, the hash value of the created first waybill information is stored in the blockchain.

For another example, when the second waybill is received, the second waybill information is stored, and the hash value of the second waybill information is stored in the blockchain.

By storing the hash value of the process waybill information of each status into the blockchain, the reliable storage of the hash value is realized by using the tamper-proof characteristic of the blockchain stored information.

S203, acquiring the sign-bill return request sent by the shipment terminal.

S204, taking sign-bill information corresponding to the sign-bill return request as target sign-bill information.

In the above embodiment in which the sign-bill information is acquired, the sign-bill information corresponding to the signing return request may be taken as the target sign-bill information.

S205, acquiring a target hash value corresponding to the target sign-bill information from the blockchain.

S206, sending the target sign-bill information to the shipment terminal, when verifying that the target sign-bill information is correct by the target hash value.

The implementations and technical effects of steps S203 to S206 in the embodiment shown in FIG. 3 are similar to those of steps S101 to S104 shown in FIG. 2, which will not described herein again.

In this embodiment, the blockchain is used to record the creating and updating of the process waybill information in the logistics process, and the digital signature is used to improve the reliability of the process waybill information transmission process, which provides a data basis for the check in the sign-bill return, and improves the reliability of the final obtained sign-bill information.

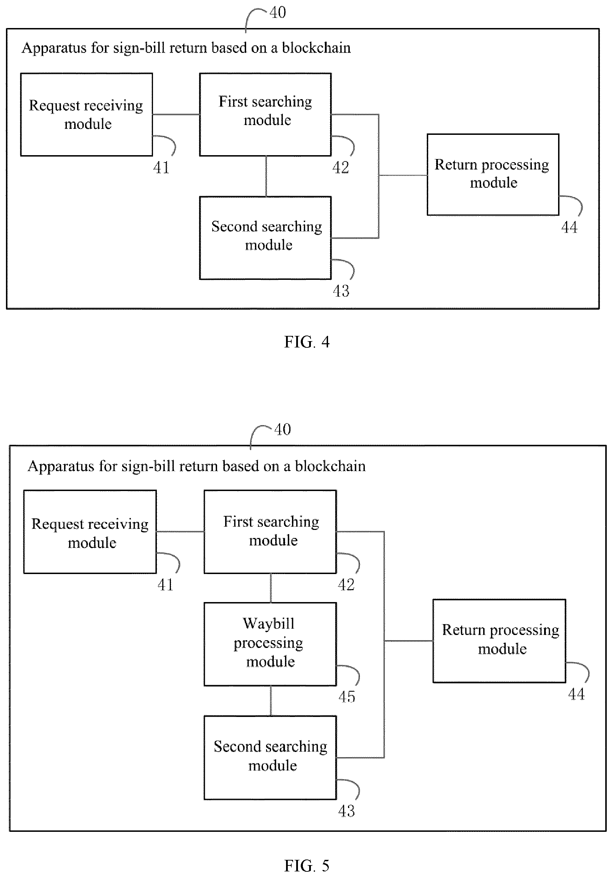

Referring to FIG. 4, which is a schematic structural diagram of an apparatus for sign-bill return based on a blockchain provided by an embodiment of the present invention. The apparatus for sign-bill return based on a blockchain 40 shown in FIG. 4 includes:
a request receiving module 41, configured to acquire a sign-bill return request sent by a shipment terminal;
a first searching module 42, configured to acquire pre-stored target sign-bill information according to the sign-bill return request;
a second searching module 43, configured to acquire a target hash value corresponding to the target sign-bill information from the blockchain; and
a return processing module 44, configured to send the target sign-bill information to the shipment terminal when verifying that the target sign-bill information is correct by the target hash value.

The present invention provides an apparatus for sign-bill return based on a blockchain, through acquiring a sign-bill return request sent by a shipment terminal; acquiring pre-stored target sign-bill information according to the sign-bill return request; acquiring a target hash value corresponding to the target sign-bill information from the blockchain; and sending the target sign-bill information to the shipment terminal, when verifying that the target sign-bill information is correct by the target hash value, the tamper-proof blockchain storage of the target sign-bill information is achieved, which not only improves the efficiency of the sign-bill return, but also improves the reliability of the sign-bill return.

Optionally, the return processing module 44 is configured to perform hash processing on the target sign-bill information to obtain a hash value to be verified; and determining that the target sign-bill information is correct, if the hash value to be verified is consistent with the target hash value.

Referring to FIG. 5, is a schematic structural diagram of another apparatus for sign-bill return based on a blockchain provided by an embodiment of the present invention. The apparatus for sign-bill return based on a blockchain 40 shown in FIG. 5 further includes:
a waybill processing module 45, configured to, before the first searching module 42 acquires the pre-stored target sign-bill information according to the sign-bill return request, create or update process waybill information according to order information, preset delivery signature information and waybill real-time status information, where the process waybill information includes first waybill information, second waybill information or sign-bill information, and the waybill real-time status information includes: an issuing status, a transportation status or a signing status; and store the process waybill information and store a hash value of the process waybill information into the blockchain.

Correspondingly, the first searching module 42 is configured to take sign-bill information corresponding to the sign-bill return request as target sign-bill information.

Optionally, the waybill processing module 45 is configured to send the second waybill information to the logistics terminal when receiving a sign-bill request sent by a logistics terminal, so that, when verifying that the delivery signature information is correct, the logistics terminal provides an encoded image indicating the second waybill information for a receiving terminal according to the second waybill information, where the second waybill information includes waybill real-time status information indicating the transportation status, the order information and the preset delivery signature information; and receive the sign-bill information from the receiving terminal and verifying that the sign-bill information is correct, where the sign-bill information includes receipt signature information, the second waybill information and waybill real-time status information indicating a sign-bill status, and the sign-bill information is sent when the receiving terminal scans the coding image to obtain the second waybill information, and before sending the sign-bill information, the receiving terminal also verifies that the delivery signature information is correct.

Optionally, the waybill processing module 45 is configured to store the sign-bill information and store the hash value of the sign-bill information into the blockchain, when verifying that the sign-bill information is correct.

Correspondingly, the first search module 42 is configured to take the sign-bill information corresponding to the signature return request as the target sign-bill information.

Optionally, the waybill processing module 45 is configured to verify that the receipt signature information included in the sign-bill information is correct, and to determine that the identity information indicated by the receipt signature information is matched with recipient information indicated in the order information, where the receipt signature information includes a receipt digital certificate and a receipt digital signature; and the receipt digital signature is bound to receiving terminal user information.

Optionally, the delivery signature information includes a preset delivery digital certificate and a preset delivery digital signature. The waybill processing module 45 is also configured to, before sending the second waybill information to the logistics terminal when receiving the sign-bill request sent by the logistics terminal, create the first waybill information according to the order information, waybill real-time status information indicating an issuing status, the preset delivery digital certificate and the preset delivery digital signature, where the first waybill information includes the order information, the waybill real-time status information indicating the issuing status, the preset delivery digital certificate and the preset delivery digital signature.

Optionally, the waybill processing module 45 is also configured to, before sending the second waybill information to the logistics terminal when receiving the sign-bill request sent by the logistics terminal, send the first waybill information to the logistics terminal, so that the logistics terminal receives the first waybill information when verifying that the delivery digital certificate and the delivery digital signature are correct; and receive the second waybill information from the logistics terminal, where the second waybill information is obtained through the logistics terminal updating the real-time status information of the waybill in the first waybill information according to the transportation status.

Optionally, the waybill processing module 45 is also configured to store a hash value of the first waybill information into the blockchain; and/or
store the second waybill information and store a hash value of the second waybill information into the blockchain.

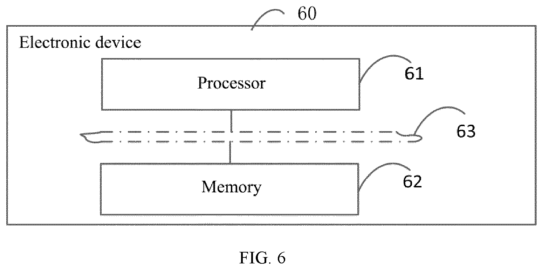

Referring to FIG. 6, which schematic structural diagram of hardware of an electronic device provided by the embodiment of the present invention. The electronic device 60 includes a processor 61, a memory 62 and a computer program; where
the memory 62 is configured to store the computer program, and the memory 62 may also be a flash. The computer program is, for example, an application program, and a functional module, for realizing the above method.

The processor 61 is configured to execute the computer program stored in the memory to realize each step executed by the system server in the above method for sign-bill return base on a blockchain. Specifically, please refer to the relevant description in the previous method embodiments.

Optionally, the memory 62 may be independent or integrated with the processor 61.

When the memory 62 is a component independent of the processor 61, the device may also include:
a bus 63 for connecting the memory 62 and the processor 61.

The present invention also provides a readable storage medium storing a computer program therein. The computer program, when executed by the processor, implements the method for sign-bill return based on a blockchain provided by the above various embodiments.

The readable storage medium can be a computer storage medium or a communication medium. The communication medium includes any medium that facilitates the transmission of computer programs from one place to another. The computer storage medium can be any available medium that can be accessed by a general-purpose or special-purpose computer. For example, a readable storage medium is coupled to the processor, so that the processor can read information from and write information to the readable storage medium. Of course, the readable storage medium can also be an integral part of the processor. The processor and readable storage medium can be located in application specific integrated circuits (ASIC). In addition, the ASIC may be located in the user equipment. Of course, the processor and readable storage medium can also exist in the communication device as discrete components. The readable storage medium can be a read only memory (ROM), a random access memory (RAM), a CD-ROM, a magnetic tape, a floppy disk, an optical data storage device, etc.

The present invention also provides a program product, where the program product includes execution instructions, and the execution instructions are stored in a readable storage medium. At least one processor of the device can read the execution instructions from the readable storage medium, and at least one processor executes the execution instruction to cause the device to implement the method for sign-bill return based on a blockchain provided by the above various embodiments.

In the embodiment of the above equipment, it should be understood that the processor can be a central processing unit (CPU), can also be other general-purpose processors, a digital signal processor (DSP), an application specific integrated circuit (ASIC), etc. The general-purpose processor can be a microprocessor or the processor can also be any conventional processor, etc. The steps of the method combined with the present invention can be directly reflected in the execution of the hardware processor, or a combination of hardware and software modules in the processor.

Finally, it should be noted that the above embodiments are only used to illustrate the technical scheme of the present invention, not to limit it; although the present invention has been described in detail with reference to the above embodiments, those skilled in the art should understand: it can still modify the technical scheme recorded in the above embodiments, or make equivalent replacement for some or all of the technical features; and these modifications or substitutions do not make the essence of the corresponding technical scheme separate from the scope of the technical scheme of each embodiment of the present invention.

## Claims

1. A method for sign-bill return based on a blockchain, comprising:
acquiring (S101) a sign-bill return request sent by a shipment terminal;
acquiring (S102) pre-stored target sign-bill information according to the sign-bill return request;
acquiring (S103) a target hash value corresponding to the target sign-bill information from the blockchain;
sending (104) the target sign-bill information to the shipment terminal when verifying that the target sign-bill information is correct by the target hash value;
wherein before acquiring (S102) the pre-stored target sign-bill information according to the sign-bill return request, the method further comprises:
creating (S201) or updating process waybill information according to order information, preset delivery signature information and waybill real-time status information, wherein the process waybill information comprises first waybill information, second waybill information or sign-bill information, and the waybill real-time status information comprises: an issuing status, a transportation status or a signing status; and
storing (S202) the process waybill information and storing a hash value of the process waybill information into the blockchain;
wherein the acquiring (S102) the pre-stored target sign-bill information according to the sign-bill return request comprising:
taking (S204) sign-bill information corresponding to the sign-bill return request as target sign-bill information;
**characterized in that** the creating (S201) or updating the process waybill information according to the order information, the preset delivery signature information and the waybill real-time status information comprises:
sending the second waybill information to the logistics terminal when receiving a sign-bill request sent by a logistics terminal, so that, when verifying that the delivery signature information is correct, the logistics terminal provides an encoded image indicating the second waybill information for a receiving terminal according to the second waybill information, wherein the second waybill information comprises waybill real-time status information indicating the transportation status, the order information and the preset delivery signature information; and
receiving the sign-bill information from the receiving terminal and verifying that the sign-bill information is correct, wherein the sign-bill information comprises receipt signature information, the second waybill information and waybill real-time status information indicating a sign-bill status, and the sign-bill information is sent when the receiving terminal scans the coding image to obtain the second waybill information, and before sending the sign-bill information, the receiving terminal also verifies that the delivery signature information is correct.

2. The method according to claim 1, wherein the verifying that the target sign-bill information is correct by the target hash value comprises:
performing hash processing on the target sign-bill information to obtain a hash value to be verified; and
determining that the target sign-bill information is correct, if the hash value to be verified is consistent with the target hash value.

3. The method according to claim 1, wherein the storing (S202) the process waybill information and storing the hash value of the process waybill information into the blockchain comprises:
storing the sign-bill information and storing the hash value of the sign-bill information into the blockchain, when verifying that the sign-bill information is correct.

4. The method according to claim 1, wherein the verifying that the sign-bill information is correct comprises:
verifying that the receipt signature information comprised in the sign-bill information is correct, and determining that identity information indicated by the receipt signature information is matched with recipient information indicated in the order information, wherein the receipt signature information comprises a receipt digital certificate and a receipt digital signature, and the receipt digital signature is bound to receiving terminal user information.

5. The method according to any one of claims 1 to 4, wherein the delivery signature information comprises a preset delivery digital certificate and a preset delivery digital signature; and
before sending the second waybill information to the logistics terminal when receiving the sign-bill request sent by the logistics terminal, the method further comprises:
creating the first waybill information according to the order information, waybill real-time status information indicating an issuing status, the preset delivery digital certificate and the preset delivery digital signature, wherein the first waybill information comprises the order information, the waybill real-time status information indicating the issuing status, the preset delivery digital certificate and the preset delivery digital signature.

6. The method according to claim 5, before sending the second waybill information to the logistics terminal when receiving the sign-bill request sent by the logistics terminal, further comprising:
sending the first waybill information to the logistics terminal, so that the logistics terminal receives the first waybill information when verifying that the delivery digital certificate and the delivery digital signature are correct; and
receiving the second waybill information from the logistics terminal, wherein the second waybill information is obtained through the logistics terminal updating the real-time status information of the waybill in the first waybill information according to the transportation status.

7. The method according to claim 6, wherein the storing (S202) the process waybill information and storing the hash value of the process waybill information into the blockchain further comprises:
storing a hash value of the first waybill information into the blockchain; and/or
storing the second waybill information and storing a hash value of the second waybill information into the blockchain.

8. An apparatus for sign-bill return based on a blockchain (40), comprising:
a request receiving module (41), configured to acquire a sign-bill return request sent by a shipment terminal;
a first searching module (42), configured to acquire pre-stored target sign-bill information according to the sign-bill return request;
a second searching module (43), configured to acquire a target hash value corresponding to the target sign-bill information from the blockchain; and
a return processing module (44), configured to send the target sign-bill information to the shipment terminal when verifying that the target sign-bill information is correct by the target hash value;
the apparatus for sign-bill return based on a blockchain (40) further comprises:
a waybill processing module (45), configured to, before the first searching module (42) acquires the pre-stored target sign-bill information according to the sign-bill return request, create or update process waybill information according to order information, preset delivery signature information and waybill real-time status information, wherein the process waybill information comprises first waybill information, second waybill information or sign-bill information, and the waybill real-time status information comprises: an issuing status, a transportation status or a signing status; and store the process waybill information and store a hash value of the process waybill information into the blockchain;
wherein the first searching module (42) is further configured to take sign-bill information corresponding to the sign-bill return request as target sign-bill information;
**characterized in that** the waybill processing module (45) is further configured to send the second waybill information to the logistics terminal when receiving a sign-bill request sent by a logistics terminal, so that, when verifying that the delivery signature information is correct, the logistics terminal provides an encoded image indicating the second waybill information for a receiving terminal according to the second waybill information, wherein the second waybill information comprises waybill real-time status information indicating the transportation status, the order information and the preset delivery signature information; and
receive the sign-bill information from the receiving terminal and verifying that the sign-bill information is correct, wherein the sign-bill information comprises receipt signature information, the second waybill information and waybill real-time status information indicating a sign-bill status, and the sign-bill information is sent when the receiving terminal scans the coding image to obtain the second waybill information, and before sending the sign-bill information, the receiving terminal also verifies that the delivery signature information is correct.

9. An electronic device (60), **characterized by** comprising: a memory (62), a processor (61) and a computer program, wherein the memory (62) stores the computer program which, when executed by the processor (61), executes the method for sign-bill return based on a blockchain according to any one of claims 1 to 7.

10. A readable storage medium, **characterized in that** the readable storage medium stores a computer program which, when executed by a processor, implements the method for sign-bill return based on a blockchain according to any one of claims 1 to 7.

## Patentansprüche

1. Verfahren zum Zurücksenden eines unterschriebenen Frachtbriefs basierend auf einer Blockchain, umfassend:
Erfassen (S101) einer Anforderung zum Zurücksenden eines unterschriebenen Frachtbriefs, die von einem Versandterminal gesendet wurde;
Erfassen (S102) von vorgespeicherten Zielinformationen über einen unterschriebenen Frachtbrief gemäß der Anforderung zum Zurücksenden eines unterschriebenen Frachtbriefs;
Erfassen (S103) eines Zielhashwerts, der den Zielinformationen über einen unterschriebenen Frachtbrief entspricht, von der Blockchain;
Senden (104) der Zielinformationen über einen unterschriebenen Frachtbrief an das Versandterminal beim Verifizieren, dass die Zielinformationen über einen unterschriebenen Frachtbrief korrekt sind, durch den Zielhashwert;
wobei vor dem Erfassen (S102) der vorgespeicherten Zielinformationen über einen unterschriebenen Frachtbrief gemäß der Anforderung zum Zurücksenden eines unterschriebenen Frachtbriefs das Verfahren ferner Folgendes umfasst:
Erzeugen (S201) oder Aktualisieren von Prozessfrachtbriefinformationen gemäß Auftragsinformationen, voreingestellten Zustellbestätigungsinformationen und Echtzeitstatusinformationen des Frachtbriefs, wobei die Prozessfrachtbriefinformationen erste Frachtbriefinformationen, zweite Frachtbriefinformationen oder Informationen über einen unterschriebenen Frachtbrief umfassen und die Echtzeitstatusinformationen des Frachtbriefs Folgendes umfassen: einen Ausstellungsstatus, einen Transportstatus oder einen Unterschriftsstatus; und
Speichern (S202) der Prozessfrachtbriefinformationen und Speichern eines Hashwerts der Prozessfrachtbriefinformationen in der Blockchain;
wobei das Erfassen (S102) der vorgespeicherten Zielinformationen über einen unterschriebenen Frachtbrief gemäß der Anforderung zum Zurücksenden eines Frachtbriefs Folgendes umfasst:
Verwenden (S204) von Informationen über einen unterschriebenen Frachtbrief, die der Anforderung zum Zurücksenden eines unterschriebenen Frachtbriefs entsprechen, als Zielinformationen über einen unterschriebenen Frachtbrief;
**dadurch gekennzeichnet, dass** das Erzeugen (S201) oder Aktualisieren der Prozessfrachtbriefinformationen gemäß den Auftragsinformationen, den voreingestellten Zustellbestätigungsinformationen und den Echtzeitstatusinformationen des Frachtbriefs Folgendes umfasst:
Senden der zweiten Frachtbriefinformationen an das Logistikterminal beim Empfangen einer Anforderung für einen unterschriebenen Frachtbrief, die von einem Logistikterminal gesendet wurde, sodass beim Verifizieren, dass die Zustellbestätigungsinformationen korrekt sind, das Logistikterminal ein codiertes Bild bereitstellt, das die zweiten Frachtbriefinformationen für ein empfangendes Terminal gemäß den zweiten Frachtbriefinformationen angibt, wobei die zweiten Frachtbriefinformationen Echtzeitstatusinformationen des Frachtbriefs umfassen, die den Transportstatus, die Auftragsinformationen und die voreingestellten Zustellbestätigungsinformationen angeben; und
Empfangen der Informationen über einen unterschriebenen Frachtbrief von dem empfangenden Terminal und Verifizieren, dass die Informationen über einen unterschriebenen Frachtbrief korrekt sind, wobei die Informationen über einen unterschriebenen Frachtbrief Empfangsbestätigungsinformationen, die zweiten Frachtbriefinformationen und die Echtzeitstatusinformationen des Frachtbriefs, die einen Status eines unterschriebenen Frachtbriefs angeben, umfassen und die Informationen über einen unterschriebenen Frachtbrief gesendet werden, wenn das empfangende Terminal das codierende Bild scannt, um die zweiten Frachtbriefinformationen zu erhalten, und vor dem Senden der Informationen über einen unterschriebenen Frachtbrief das empfangende Terminal auch verifiziert, dass die Zustellbestätigungsinformationen korrekt sind.

2. Verfahren nach Anspruch 1, wobei das Verifizieren, dass die Zielinformationen über einen unterschriebenen Frachtbrief korrekt sind, durch den Zielhashwert Folgendes umfassen:
Durchführen von Hashwertverarbeitung an den Zielinformationen über einen unterschriebenen Frachtbrief, um einen zu verifizierenden Hashwert zu erhalten; und
Bestimmen, dass die Zielinformationen über einen unterschriebenen Frachtbrief korrekt sind, wenn der zu verifizierende Hashwert mit dem Zielhashwert konsistent ist.

3. Verfahren nach Anspruch 1, wobei das Speichern (S202) der Prozessfrachtbriefinformationen und das Speichern des Hashwerts der Prozessfrachtbriefinformationen in der Blockchain Folgendes umfassen:
Speichern der Informationen über einen unterschriebenen Frachtbrief und Speichern des Hashwerts der Informationen über einen unterschriebenen Frachtbrief in der Blockchain beim Verifizieren, dass die Informationen über einen unterschriebenen Frachtbrief korrekt sind.

4. Verfahren nach Anspruch 1, wobei das Verifizieren, dass die Informationen über einen unterschriebenen Frachtbrief korrekt sind, Folgendes umfasst:
Verifizieren, dass die Empfangsbestätigungsinformationen, die in den Informationen über einen unterschriebenen Frachtbrief enthalten sind, korrekt sind, und Bestimmen, dass Identitätsinformationen, die von den Empfangsbestätigungsinformationen angegeben werden, mit Empfängerinformationen übereinstimmen, die in den Auftragsinformationen angegeben sind, wobei die Empfangsbestätigungsinformationen ein digitales Empfangszertifikat und eine digitale Empfangsbestätigung umfassen und die digitale Empfangsbestätigung an die Benutzerinformationen des empfangenen Terminals gebunden ist.

5. Verfahren nach einem der Ansprüche 1 bis 4, wobei die Zustellbestätigungsinformationen ein voreingestelltes digitales Zustellzertifikat und eine voreingestellte digitale Zustellbestätigung umfassen; und
vor dem Senden der zweiten Frachtbriefinformationen an das Logistikterminal beim Empfangen der Anforderung für einen unterschriebenen Frachtbrief, die von dem Logistikterminal gesendet wurde, das Verfahren ferner Folgendes umfasst:
Erzeugen der ersten Frachtbriefinformationen gemäß den Auftragsinformationen, den Echtzeitstatusinformationen des Frachtbriefs, die einen Ausstellungsstatus angeben, dem voreingestellten digitalen Zustellzertifikat und der voreingestellten digitalen Zustellbestätigung, wobei die ersten Frachtbriefinformationen die Auftragsinformationen, die Echtzeitstatusinformationen des Frachtbriefs, die den Ausstellungsstatus angeben, das voreingestellte digitale Zustellzertifikat und die voreingestellte digitale Zustellbestätigung umfassen.

6. Verfahren nach Anspruch 5, ferner umfassend, vor dem Senden der zweiten Frachtbriefinformationen an das Logistikterminal beim Empfangen der Anforderung für einen unterschriebenen Frachtbrief, die von dem Logistikterminal gesendet wurde:
Senden der ersten Frachtbriefinformationen an das Logistikterminal, sodass das Logistikterminal die ersten Frachtbriefinformationen empfängt, beim Verifizieren, dass das digitale Zustellzertifikat und die digitale Zustellbestätigung korrekt sind; und
Empfangen der zweiten Frachtbriefinformationen von dem Logistikterminal, wobei die zweiten Frachtbriefinformationen durch das Logistikterminal erhalten werden, das die Echtzeitstatusinformationen des Frachtbriefs in den ersten Frachtbriefinformationen gemäß dem Transportstatus aktualisiert.

7. Verfahren nach Anspruch 6, wobei das Speichern (S202) der Prozessfrachtbriefinformationen und das Speichern des Hashwerts der Prozessfrachtbriefinformationen in der Blockchain ferner Folgendes umfassen:
Speichern eines Hashwerts der ersten Frachtbriefinformationen in der Blockchain; und/oder
Speichern der zweiten Frachtbriefinformationen und Speichern eines Hashwerts der zweiten Frachtbriefinformationen in der Blockchain.

8. Einrichtung zum Zurücksenden eines unterschriebenen Frachtbriefs basierend auf einer Blockchain (40), umfassend:
ein Anforderungsempfangsmodul (41), das dazu konfiguriert ist, eine Anforderung zum Zurücksenden eines unterschriebenen Frachtbriefs, die von einem Versandterminal gesendet wurde, zu erfassen;
ein erstes Suchmodul (42), das dazu konfiguriert ist, die vorgespeicherten Zielinformationen über einen unterschriebenen Frachtbrief gemäß der Anforderung zum Zurücksenden eines unterschriebenen Frachtbriefs zu erfassen;
ein zweites Suchmodul (43), das dazu konfiguriert ist, einen Zielhashwert, der den Zielinformationen über einen unterschriebenen Frachtbrief entspricht, von der Blockchain zu erfassen; und
ein Rücksendeverarbeitungsmodul (44), das dazu konfiguriert ist, die Zielinformationen über einen unterschriebenen Frachtbrief beim Verifizieren, dass die Zielinformationen über einen unterschriebenen Frachtbrief korrekt sind, durch den Zielhashwert an das Versandterminal zu senden;
wobei die Einrichtung zum Zurücksenden eines unterschriebenen Frachtbriefs basierend auf einer Blockchain (40) ferner Folgendes umfasst:
ein Frachtbriefverarbeitungsmodul (45), das dazu konfiguriert ist, Prozessfrachtbriefinformationen gemäß Auftragsinformationen, voreingestellten Zustellbestätigungsinformationen und Echtzeitstatusinformationen des Frachtbriefs zu erzeugen oder zu aktualisieren, bevor das erste Suchmodul (42) die vorgespeicherten Zielinformationen über einen Frachtbrief gemäß der Anforderung zum Zurücksenden eines unterschriebenen Frachtbriefs erfasst, wobei die Prozessfrachtbriefinformationen erste Frachtbriefinformationen, zweite Frachtbriefinformationen oder Informationen über einen unterschriebenen Frachtbrief umfassen und die Echtzeitstatusinformationen des Frachtbriefs Folgendes umfassen: einen Ausstellungsstatus, einen Transportstatus oder einen Unterschriftsstatus; und Speichern der Prozessfrachtbriefinformationen und Speichern eines Hashwerts der Prozessfrachtbriefinformationen in der Blockchain;
wobei das erste Suchmodul (42) ferner dazu konfiguriert ist, Informationen über einen unterschriebenen Frachtbrief, die der Anforderung zum Zurücksenden eines unterschriebenen Frachtbriefs entsprechen, als Zielinformationen über einen unterschriebenen Frachtbrief zu verwenden;
**dadurch gekennzeichnet, dass** das Frachtbriefverarbeitungsmodul (45) ferner dazu konfiguriert ist, die zweiten Frachtbriefinformationen an das Logistikterminal beim Empfangen einer Anforderung für einen unterschriebenen Frachtbrief, die von einem Logistikterminal gesendet wurde, zu senden, sodass beim Verifizieren, dass die Zustellbestätigungsinformationen korrekt sind, das Logistikterminal ein codiertes Bild bereitstellt, das die zweiten Frachtbriefinformationen für ein empfangendes Terminal gemäß den zweiten Frachtbriefinformationen angibt, wobei die zweiten Frachtbriefinformationen Echtzeitstatusinformationen des Frachtbriefs umfassen, die den Transportstatus, die Auftragsinformationen und die voreingestellten Zustellbestätigungsinformationen angeben; und
Empfangen der Informationen über einen unterschriebenen Frachtbrief von dem empfangenden Terminal und Verifizieren, dass die Informationen über einen unterschriebenen Frachtbrief korrekt sind, wobei die Informationen über einen unterschriebenen Frachtbrief Empfangsbestätigungsinformationen, die zweiten Frachtbriefinformationen und die Echtzeitstatusinformationen des Frachtbriefs, die einen Status eines unterschriebenen Frachtbriefs angeben, umfassen und die Informationen über einen unterschriebenen Frachtbrief gesendet werden, wenn das empfangende Terminal das codierende Bild scannt, um die zweiten Frachtbriefinformationen zu erhalten, und vor dem Senden der Informationen über einen unterschriebenen Frachtbrief das empfangende Terminal auch verifiziert, dass die Zustellbestätigungsinformationen korrekt sind.

9. Elektronische Vorrichtung (60), **dadurch gekennzeichnet, dass** sie ferner Folgendes umfasst: einen Speicher (62), einen Prozessor (61) und ein Computerprogramm, wobei auf dem Speicher (62) das Computerprogramm gespeichert ist, das bei Ausführung durch den Prozessor (61) das Verfahren zum Zurücksenden eines unterschriebenen Frachtbriefs basierend auf einer Blockchain nach einem der Ansprüche 1 bis 7 ausführt.

10. Lesbares Speichermedium, **dadurch gekennzeichnet, dass** auf dem lesbaren Speichermedium ein Computerprogramm gespeichert ist, das bei Ausführung durch einen Prozessor das Verfahren zum Zurücksenden eines unterschriebenen Frachtbriefs basierend auf einer Blockchain nach einem der Ansprüche 1 bis 7 implementiert.

## Revendications

1. Procédé de retour d'effets signés sur la base d'une chaîne de blocs, comprenant :
l'acquisition (S101) d'une demande de retour d'effets signés envoyée par un terminal d'expédition ;
l'acquisition (S102) d'informations d'effets signés cibles préenregistrés conformément à la demande de retour de d'effets signés ;
l'acquisition (S103) d'une valeur de hachage cible correspondant aux informations d'effets signés cibles à partir de la chaîne de blocs ;
l'envoi (104) les informations d'effets signés cibles au terminal d'expédition lors de la vérification que les informations d'effets signés cibles sont correctes par la valeur de hachage cible ;
dans lequel avant l'acquisition (S102) des informations d'effets signés cibles préenregistrées selon la demande de retour d'effets signés, le procédé comprend en outre :
la création (S201) ou la mise à jour des informations de bordereau d'expédition selon les informations de commande, les informations de signature de livraison prédéfinies et les informations d'état en temps réel du bordereau d'expédition, les informations de bordereau d'expédition comprenant des premières informations de bordereau d'expédition, des deuxièmes informations de bordereau d'expédition ou des informations d'effets signés, et les informations d'état en temps réel de bordereau d'expédition comprenant : un état d'émission, un état de transport ou un état de signature ; et
le stockage (S202) des informations de bordereau d'expédition de processus et le stockage d'une valeur de hachage des informations de bordereau d'expédition de processus dans la chaîne de blocs ;
dans lequel l'acquisition (S102) des informations d'effets signés cibles préenregistrées selon la demande de retour d'effets signés comprenant :
la prise (S204) d'informations d'effets signés correspondant à la demande de retour d'effets signés comme informations d'effets signés cibles ;
**caractérisé en ce que** la création (S201) ou la mise à jour des informations de bordereau d'expédition de processus en fonction des informations de commande, des informations de signature de livraison prédéfinies et des informations d'état en temps réel de bordereau d'expédition comprend :
l'envoi de deuxièmes informations de bordereau d'expédition au terminal logistique lors de la réception d'une demande d'effets signés envoyée par un terminal logistique, de sorte que, lors de la vérification de l'exactitude des informations de signature de livraison, le terminal logistique fournisse une image codée indiquant les deuxièmes informations de bordereau d'expédition pour un terminal de réception selon les deuxièmes informations de bordereau d'expédition, les deuxièmes informations de bordereau d'expédition comprenant des informations d'état en temps réel de bordereau d'expédition indiquant l'état de transport, les informations de commande et les informations de signature de livraison prédéfinies ; et
la réception des informations d'effets signés à partir du terminal de réception et vérifier que les informations d'effets signés sont correctes, les informations d'effets signés comprenant des informations de signature de reçu, les deuxièmes informations de bordereau d'expédition et des informations d'état de bordereau d'expédition en temps réel indiquant un état d'effets signés, et les informations d'effets signés sont envoyées lorsque le terminal de réception scanne l'image de codage pour obtenir les deuxièmes informations de bordereau d'expédition, et avant d'envoyer les informations d'effets signés, le terminal de réception vérifie également que les informations de signature de livraison sont correctes.

2. Procédé selon la revendication 1, dans lequel la vérification de l'exactitude des informations d'effets signés cibles par la valeur de hachage cible comprend :
la réalisation d'un traitement de hachage sur les informations de d'effets signés cibles pour obtenir une valeur de hachage à vérifier ; et
la détermination que les informations d'effets signés cibles sont correctes, si la valeur de hachage à vérifier est cohérente avec la valeur de hachage cible.

3. Procédé selon la revendication 1, dans lequel le stockage (S202) des informations de bordereau d'expédition de processus et le stockage de la valeur de hachage des informations de bordereau d'expédition de processus dans la chaîne de blocs comprennent :
le stockage des informations d'effets signés et le stockage de la valeur de hachage des informations d'effets signés dans la chaîne de blocs, lors de la vérification que les informations d'effets signés sont correctes.

4. Procédé selon la revendication 1, dans lequel la vérification de l'exactitude des informations d'effets signés comprend :
vérifier que les informations de signature de reçu comprises dans les informations d'effets signés sont correctes, et la détermination que les informations d'identité indiquées par les informations de signature de reçu correspondent aux informations de destinataire indiquées dans les informations de commande, les informations de signature de reçu comprenant un certificat numérique de reçu et une signature numérique de reçu, et la signature numérique de reçu est liée aux informations d'utilisateur de terminal de réception.

5. Procédé selon l'une quelconque des revendications 1 à 4, dans lequel les informations de signature de livraison comprennent un certificat numérique de livraison prédéfini et une signature numérique de livraison prédéfinie ; et
avant l'envoi des deuxièmes informations de bordereau d'expédition au terminal logistique lors de la réception de la demande d'effets signés envoyée par le terminal logistique, le procédé comprend en outre :
la création des premières informations de bordereau d'expédition selon les informations de commande, les informations d'état en temps réel de bordereau d'expédition indiquant un état d'émission, le certificat numérique de livraison prédéfini et la signature numérique de livraison prédéfinie, les premières informations de bordereau d'expédition comprenant les informations de commande, les informations d'état en temps réel de bordereau d'expédition indiquant l'état d'émission, le certificat numérique de livraison prédéfini et la signature numérique de livraison prédéfinie.

6. Procédé selon la revendication 5, comprenant en outre, avant l'envoi des deuxièmes informations de bordereau d'expédition au terminal logistique lors de la réception de la demande d'effets signés envoyée par le terminal logistique :
l'envoi des premières informations de bordereau d'expédition au terminal logistique, de sorte que le terminal logistique reçoive les premières informations de bordereau d'expédition lors de la vérification que le certificat numérique de livraison et la signature numérique de livraison sont corrects ; et
la réception des deuxièmes informations de bordereau d'expédition du terminal logistique, les deuxièmes informations de bordereau d'expédition étant obtenues par le terminal logistique mettant à jour les informations d'état en temps réel du bordereau d'expédition dans les premières informations de bordereau d'expédition en fonction de l'état du transport.

7. Procédé selon la revendication 6, dans lequel le stockage (S202) des informations de bordereau d'expédition de processus et le stockage de la valeur de hachage des informations de bordereau d'expédition de processus dans la chaîne de blocs comprennent en outre :
le stockage d'une valeur de hachage des premières informations de bordereau d'expédition de processus dans la chaîne de blocs ; et/ou
le stockage des deuxièmes informations de bordereau d'expédition et le stockage d'une valeur de hachage des deuxièmes informations de bordereau d'expédition dans la chaîne de blocs.

8. Appareil de retour d'effets signés sur la base d'une chaîne de blocs (40), comprenant :
un module de réception de demande (41), configuré pour acquérir une demande de retour d'effets signés envoyée par un terminal d'expédition ;
un premier module de recherche (42), configuré pour acquérir des informations d'effets signés cibles préenregistrées en fonction de la demande de retour d'effets signés ;
un deuxième module de recherche (43), configuré pour acquérir une valeur de hachage cible correspondant aux informations d'effets signés cibles de la chaîne de blocs ; et
un module de traitement de retour (44), configuré pour envoyer les informations d'effets signés cibles au terminal d'expédition lors de la vérification que les informations d'effets signés cibles sont correctes par la valeur de hachage cible ;
l'appareil de retour d'effets signés sur la base d'une chaîne de blocs (40) comprend en outre :
un module de traitement de bordereau d'expédition (45), configuré pour, avant que le premier module de recherche (42) n'acquière les informations d'effets signés cibles préenregistrées selon la demande de retour d'effets signés, créer ou mettre à jour les informations de bordereau d'expédition de processus selon les informations de commande, les informations de signature de livraison prédéfinies et les informations d'état de bordereau d'expédition en temps réel, les informations de bordereau d'expédition de processus comprenant des premières informations de bordereau d'expédition, des deuxièmes informations de bordereau d'expédition, ou des informations d'effets signés, et les informations d'état de bordereau d'expédition en temps réel comprenant : un état d'émission, un état de transport ou un état de signature ; et stocker les informations de bordereau d'expédition de processus et stocker une valeur de hachage des informations de bordereau d'expédition de processus dans la chaîne de blocs ;
dans lequel le premier module de recherche (42) est en outre configuré pour prendre des informations d'effets signés correspondant à la demande de retour d'effets signés comme informations d'effets signés cibles ;
**caractérisé en ce que** le module de traitement de bordereau d'expédition (45) est en outre configuré pour envoyer les deuxièmes informations de bordereau d'expédition au terminal logistique lors de la réception d'une demande d'effets signés envoyée par un terminal logistique, de sorte que, lors de la vérification que les informations de signature de livraison sont correctes, le terminal logistique fournit une image codée indiquant les deuxièmes informations de bordereau d'expédition pour un terminal de réception selon les deuxièmes informations de bordereau d'expédition, les deuxièmes informations de bordereau d'expédition comprenant des informations d'état en temps réel de bordereau d'expédition indiquant l'état de transport, les informations de commande et les informations de signature de livraison prédéfinies ; et
la réception des informations d'effets signés à partir du terminal de réception et la vérification que les informations d'effets signés sont correctes, les informations d'effets signés comprenant des informations de signature de reçu, les deuxièmes informations de bordereau d'expédition et des informations d'état de bordereau d'expédition en temps réel indiquant un état d'effets signés, et les informations d'effets signés sont envoyées lorsque le terminal de réception scanne l'image de codage pour obtenir les deuxièmes informations de bordereau d'expédition, et avant l'envoi des informations d'effets signés, le terminal de réception vérifie également que les informations de signature de livraison sont correctes.

9. Dispositif électronique (60), **caractérisé en ce qu'**il comprend : une mémoire (62), un processeur (61) et un programme informatique, la mémoire (62) stockant le programme informatique qui, lorsqu'il est exécuté par le processeur (61), exécute le procédé de retour d'effets signés sur la base d'une chaîne de blocs selon l'une quelconque des revendications 1 à 7.

10. Support de stockage lisible, **caractérisé en ce que** le support de stockage lisible stocke un programme informatique qui, lorsqu'il est exécuté par un processeur, met en œuvre le procédé de retour d'effets signés sur la base d'une chaîne de blocs selon l'une quelconque des revendications 1 à 7.
